# EUROPEAN PATENT APPLICATION

(11) **EP 4 194 163 A1**
(43) Date of publication of application: **14.06.2023**
(21) Application number: 21212937.3
(22) Date of filing: 07.12.2021
(51) Int. Cl.: B27K 3/15, B05D 7/06, C08G 63/00, C09D 5/14

(54) **TREATMENT OF WOOD WITH POLYORGANOSILOXANES**

(71) Applicant: Archroma IP GmbH, 4153 Reinach (CH); Georg-August-Universität Göttingen, 37073 Göttingen (DE)
(72) Inventor: LANG, Georg, 79599 Wittlingen (DE); HARBIG, Roland, 84508 Burgkirchen a.d. Alz (DE); MILITZ, Holger, 37120 Bovenden (DE); EMMERICH, Lukas, 37120 Bovenden (DE)
(74) Representative: Wallinger Ricker Schlotter Tostmann

(57) **Abstract**

The present application relates to a process for treating a lignocellulosic material with at least one polyorganosiloxane compound, the polyorganosiloxane compound comprising a polyorganosiloxane backbone and at least one ammonium group residue of formula (I): 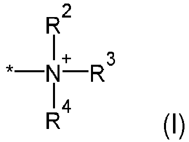 wherein
R², R³, R⁴ independently from each other signify linear, cyclic or branched, saturated or unsaturated, substituted or unsubstituted C₁ to C₄₅ hydrocarbon residues optionally including one or more hetero atoms of O, S, N,
* signifies the binding site linking to the polyorganosiloxane backbone.

## Description

The present application relates to a process for treating a lignocellulosic material with a polyorganosiloxane compound to enhance biological durability of the lignocellulosic material. The present application further relates to lignocellulosic material being impregnated with a polyorganosiloxane compound.

### Background

Processes and agents for finishing of wood and lignocellulosic materials using preservative chemicals and agents providing biological durability and dimensional stability is under continuous investigation in the art. Wood treatment agents known in the art often comprise heavy metal components to achieve desired finishing performances of wood and lignocellulosic materials. It is however inevitable that such heavy metal containing agents migrate into the environment and thus represent a harmful burden for living organisms. It is therefore a prevailing aim in the art to reduce the use of heavy metal containing wood treatment agents in the treatment of lignocellulosic materials.

Native wood materials suffer from its low biological durability and dimensional stability. When using such native wood materials in outdoor environment, in changing climatic condition said wood materials undergo an alternating moisture uptake and release causing dimensional shrinking and swelling of the wood material. Additionally, moisture uptake makes the wood material prone to wood-destroying fungi. Accordingly, the focus of research has been put on wood modification agents increasing the biological durability and moisture resistance of wood and lignocellulosic material.

One approach for achieving above mentioned requirements is the impregnation of wood with polyorganosiloxane compounds. The commonly known processes employing those finishing agents require for curing and reaction steps at elevated temperatures during the impregnation of wood and lignocellulosic material. Commonly, temperatures of above 100°C are used for finishing wood and lignocellulosic material with said polyorganosiloxane compounds. It is from an industrial viewpoint however desirable to perform such curing and reaction steps at lower temperatures, since impregnation plants in the wood industry are often limited to maximum temperatures of 80 °C. Accordingly, the commonly known processes/ technologies with known polyorganosiloxanes (curing and drying at > 100°C) cannot be easily implemented in available equipment at an industrial scale and require additional investment costs in special drying equipment and a certain process know-how.

DE 10 2004 036 918 A1 discloses a protective agent for lignocellulosic materials, characterized in that the protective agent contains an amino-modified polymeric silicone.

WO 2012/143371 A1 discloses functionalized polyorganosiloxanes or silanes for the treatment of lignocellulosic materials, the polyorganosiloxanes comprising functional groups.

WO 2014/111514 A1 discloses a process for treating cellulosic substrates with functionalized polyorganosiloxanes comprising functional groups of aromatic, heteroaromatic and amino groups.

DE 10 2012 103 372 A1 discloses amino functional polysiloxanes as a protective agent for lignocellulosic materials.

With respect to the deficiencies present in the state of the art, there is a steady demand to increase the biological durability and dimensional stability of wood and lignocellulosic material by means of impregnation with heavy metal free wood treatment agents without requiring high curing temperatures.

### Summary of the Invention

In one first aspect of the invention the above-mentioned objective is solved by the following items.
Item 1: A process for treating a lignocellulosic material with at least one polyorganosiloxane compound, the polyorganosiloxane compound comprising a polyorganosiloxane backbone and at least one ammonium group residue of formula (I): 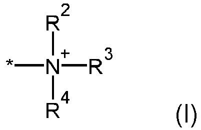 wherein
   R², R³, R⁴ independently from each other signify linear, cyclic or branched, saturated or unsaturated, substituted or unsubstituted C₁ to C₄₅ hydrocarbon residues optionally including one or more hetero atoms of O, S, N,
   * signifies the binding site linking to the polyorganosiloxane backbone.
Item 2: A process according to item 1 wherein R², R³, R⁴ independently from each other signify C₁ or C₂ saturated or C₂ unsaturated hydrocarbon residue, and/ or linear, cyclic or branched saturated or unsaturated C₃ to C₄₅ hydrocarbon.
Item 3: A process according to items 1 or 2, wherein R², R³, R⁴ independently from each other signify C₁ or C₂ saturated hydrocarbon residue, and/ or linear, cyclic or branched saturated C₃ to C₂₀ hydrocarbon.
Item 4: A process according to any one of the preceding items wherein the polyorganosiloxane compound comprises further at least one bivalent moiety -R-consisting of C₁ to C₂₀ saturated or unsaturated, linear or branched hydrocarbon residue optionally including one or more hetero atoms of O, S, N, linking at least one ammonium group residue of formula (I) via the binding site * to a siloxane moiety of the polyorganosiloxane backbone.
Item 5: A process according to any one of the preceding, wherein the polyorganosiloxane compound is a compound of formula (II): 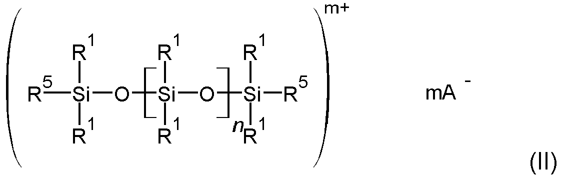 wherein R¹ and R⁵ signifies independently from each other an organic aliphatic C₁ to C₆ residue, or a bivalent moiety -R- as specified in claim 4, linking at the least one ammonium group residue of formula (I) via the binding site * to a siloxane moiety, wherein at least one, preferably two, or preferably at least 10, preferably at least 20 of R¹ together with R⁵ in compound of formula (II) signify the bivalent moiety -R-,
   m+ signifies the m-fold positive charge allocated by polyorganosiloxane compound mA⁻ signifies m charge balancing anions A⁻ selected from the group consisting of: halogenide, hydroxide, ⅓ borate, ½ sulfate, ½ phosphate, nitrate, carboxylates, or mixtures thereof,
   n signifies the number average degree of polymerization and is from 9 to 200, preferably 30 to 150, preferably 35 to 75, preferably 40 to 60.
Item 6: A process according to any item 5 wherein R¹ signifies independently from each other an organic aliphatic C₁ to C₆ residue and R⁵ signifies the bivalent moiety -R- as specified in item 4, linking at least one terminal, preferably two terminal ammonium group residues of formula (I) via the binding site * to a siloxane moiety.
Item 7: A process according to any one of the preceding items wherein weight average molecular weight of the polyorganosiloxane compound ranges from 2.000 g/mol to 12.000 g/mol.
Item 8: A process according to any one of the preceding items wherein treating the lignocellulosic material with at least one polyorganosiloxane compound comprises the steps:
   a) optionally pre-drying the lignocellulosic material,
   b) impregnating the lignocellulosic material with an aqueous composition comprising the polyorganosiloxane compound as defined in any one of claims 1 to 6,
   c) drying the impregnated lignocellulosic material.
Item 9: A process according to item 8 wherein step c) is performed at temperatures of 20 to 120 °C, 30 to 120 °C, 40 to 120°C, of 50 to 120°C, preferably 50 to 100°C, preferably 60 to 85 °C.
Item 10: A process according to items 8 or 9, wherein step b) is a vacuum-pressure impregnation process performed at pressure ranges from 5 mbar to 20 bar.
Item 11: A process according to any one of items 8 to 10, wherein in step a) the lignocellulosic material is pre-dried to a residual relative moisture content of 0.1 to 20 %, preferably 0.1 to less than 15%.
Item 12: A process according to any one of the items 8 to 11 wherein the aqueous composition is heavy metal free.
Item 13: A process for treating a lignocellulosic material with at least one polyorganosiloxane compound, preferably in form of an aqueous composition, at a temperature of less than 100°C.
Item 14: A process according to any one of items 8 to 14, wherein the aqueous composition comprises a polyorganosiloxane compound in an amount of from 2 to 40 wt%, or from 5 to 30 wt%, preferably 5 to 20 wt%, more preferably 7 to 15 wt% based on the total weight of the aqueous composition.
   In a second aspect of the invention the above-mentioned objective is solved by the following items.
Item 15: A lignocellulosic material treated in a process according to any one of items 1 to 14
Item 16: A lignocellulosic material according to item 15, characterized in that the weight percentage gain after drying and leaching determined according to DIN EN 84 - 2018-10 is 7% or less, preferably from 5 to 7%; and/or characterized in that the swelling coefficient determined to the procedure described in the description is 14% or less, preferably from 12 % to 13 %; and/or characterized in that the mass loss by fungal decay of brown rot pathogen determined according to CEN/TS 15083-1 (2005) is below 5%.
   In a third aspect of the invention, the above-mentioned objective is solved by the following items:
Item 16: The use of a polyorganosiloxane compound as defined in any one of items 1 to 7 or use of an aqueous composition comprising the polyorganosiloxane compound as defined in items 8 to 12 or 14 as a treatment agent for lignocellulosic material.
Item 17: The use of a polyorganosiloxane compound as defined in any one of items 1 to 7 or use of an aqueous composition comprising the polyorganosiloxane compound as defined in items 8 to 12 or 14 for increasing resistance to water uptake of lignocellulosic material.

### Description of the Invention

In one aspect the invention relates to a process for treating a lignocellulosic material with a polyorganosiloxane compound, the polyorganosiloxane compound comprising a polyorganosiloxane backbone and at least one ammonium group residue of formula (I): 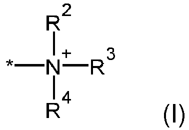 wherein R², R³, R⁴ independently from each other signify linear, cyclic or branched, saturated or unsaturated, substituted or unsubstituted C₁ to C₄₅ hydrocarbon residues optionally including one or more hetero atoms of O, S, N, and * signifies the binding site linking to the polyorganosiloxane backbone; preferably wherein R², R³, R⁴ independently from each other signify C₁ or C₂ saturated or C₂ unsaturated, substituted or unsubstituted hydrocarbon residue optionally including one or more hetero atoms of O, S, N, and/ or R², R³, R⁴ independently from each other signify linear, cyclic or branched, saturated or unsaturated, substituted or unsubstituted C₃ to C₄₅ hydrocarbon residues optionally including one or more hetero atoms of O, S, N, and * signifies the binding site linking to the polyorganosiloxane backbone.

Further, the present invention relates to a process for treating a lignocellulosic material with a polyorganosiloxane compound at temperatures of below 100 °C, preferably, below 95°C, further preferably below 90°C, even more preferred below 85°C.

By using a process as described the basic requirements for implementing an impregnation process of lignocellulosic material in industrial plants are met. In particular above-described process allows for reduced impregnation temperatures of below 100 °C such that the described process can be used in conventional wood impregnation plants. Additionally, it turned out that a permanent increase in biological durability can be achieved when applying the process of the invention to lignocellulosic material. It was further observed that the resistance to alternating moisture was improved therefore the resistance to weathering under outdoor conditions is improved.

The term *"polyorganosiloxane"* within the context of the present application refers to an oligomeric or polymeric siloxane compound carrying organic residues. In general, the molecular structure of polyorganosiloxanes is characterized by silicon atoms that are chainlike linked via oxygen atoms to form a -Si-O- backbone wherein the silicone atoms carry further organic residues bound via carbon-silicon bond to the silicon atom. In general, polyorganosiloxanes envisioned for the present inventions comprise repeating units, i.e. organosilicone repeating units, of type (A) or (B) 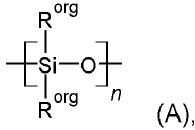 or 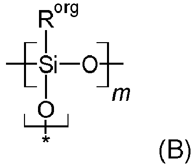 being representatives of repeating units linking to a linear backbone structure or linking to a branched backbone structure. Indices n and m describe the number of repeating units (A) and (B) in the polyorganosiloxane. The number n may be from 9 to 200, or from 30 to 150, or from 35 to 125, or from 40 to 100. The number m may be from 0 to 15. The polyorganosiloxanes comprise end groups of the type (C): 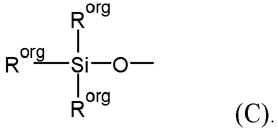 The number of end groups in the polyorganosiloxane compound may range from 0 to 15. R^{org} in (A), (B) and (C) signify organic saturated or unsaturated linear, branched or cyclic aliphatic residues or aromatic residues, wherein the R^{org} optionally comprise heteroatoms of O, S, N and each R^{org} may be the same or may be different from each other. At least one of R^{org} is a bivalent residue capable to be linked to the linking site * of the ammonium group residue (I). The polyorganosiloxane can have a linear, branched or a cyclic backbone structure.

The term *"ammonium group residue"* refers to a quaternary nitrogen atom carrying the above and below specified residues R², R³, R⁴, further being bound via the binding site * to the polyorganosiloxane backbone. As outlined above, the bivalent residue -R- can link the ammonium group residue of formula (I) to a Si atom of the polyorganosiloxane backbone. The number of the ammonium group residues bound to the polyorganosiloxane backbone via R^{org} may be at least one, or at least two, or at least 10, or at least 20, or at least 1 to at most 25, or at least 1 to at most 20, or at least 1 to at most 15 or at least 1 to at most 10, or at least 1 to at most 5, or at least 2 to at most 4, or 2, or 3 depending on the size of the polyorganosilioxane compound. In one embodiment the ammonium group residue is located at at least one end of the polyorganosiloxane backbone, i.e. is a terminal ammonium group residue located at one end or both ends of a linear polyorganosiloxane backbone; or is located at at least one end, or two ends, or three ends, or up to 20 ends of a branched polyorganosiloxane backbone. The size of the polyorganosilioxane compound is in essence dependent from the number n and/or m of the repeating units (A) and/or (B) and the number of the end groups (C). It is desirable to match the number of the ammonium group residues to the number of organosilicone units (A), (B), and (C). Typically, the ratio of the ammonium group residues to the sum of the organosiloxane groups (A), (B) and/or (C) can be in the range from 1: 5 to 1: 105.

The residues R², R³, R⁴ bound to the quaternary nitrogen atom of the ammonium group residue may be in one embodiment independently selected from methyl or ethyl, or ethylene group. The one or more hetero atoms O, S, N that may be bound to said C₁ or C₂ residue group may be structured in groups of-OH, SH, NH₂, or=O, =S, =NH, or in case of the C₂ residue may have the structure -O-, -S-, -NH-.

Also, R², R³, R⁴ may additionally or alternatively independently from each other signify linear, cyclic, or branched, saturated or unsaturated C₃ to C₄₅ hydrocarbon residues optionally including one or more hetero atoms of O, S, N. The structure of the O, S, N atoms may be as described before. Specific groups of R², R³, R⁴ comprise:
-(CH₂)₂-NH₂, -(CH₂)₃NH(CH₂)₂-NH₂, -(CH₂)₃N(CH₃)₂, -(CH₂)₅-NH₂, -CH₂-CH₂-NH₂, -CH₂CH₂-NH-CH₂CH₂-NH-C₄H₉, or
-(CH₂)₂-OH, -(CH₂)₂O(CH₂)₂-OH, -(CH₂)₂O-CH₃, -(CH₂)₅-OH, -CH₂-CH₂-OH, -CH₂CH₂-O-CH₂CH₂-O-C₄H₉, or
alkyl or alkoxy groups, in particular dihydroxyethyl, hydroxypropyl, dihydroxypropyl, trihydroxypropyl, hydroxyisopropyl, hydroxybutyl, dihydroxybutyl, trihydroxybutyl, hydroxyisobutyl, methyl, ethyl, propyl, isopropyl, butyl, isobutyl, methoxy, ethoxy, propoxy, isopropoxy, butoxy and/or isobutoxy, or propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, pentacosyl, hexacosyl, heptacosyl, octacosyl, nonacosyl, triacontyl, hentriacontyl, dotriacontyl, tritriacontyl, tetratriacontyl, pentatriacontyl. hexatriacontyl, heptatriacontyl, octatriacontyl, nonatriacontyl, tetracontyl, hentetracontyl, dotetracontyl, tritetracontyl, tetratetracontyl, pentatetracontyl and isomers thereof, or isopropyl, isobutyl or saturated or unsaturated, straight-chain, cyclic or branched hydrocarbons having up to 20 carbon atoms, allyl or butadienyl or cycloaliphatic, such as a cyclohexyl radical, or aromatic, such as phenyl, naphthyl or benzyl.

The positive charge of the at least one ammonium group residue in the polyorganosiloxane compound is counterbalanced by anions which may be selected from the group consisting of: halogenide, hydroxide, ⅓ borate, ½ sulfate, ⅓ phosphate, nitrate, and carboxylate or mixtures thereof. Halogenides may be present in form of chloride, bromide, and iodide, or mixtures thereof.

The term *"lignocellulosic material"* within the context of the present application refers to materials such as solid wood, wood-based composites like particle board, fiber board, oriented strand board, veneer-based composites (e.g. plywood, LVL) or any other wooden-based material like paper, cardboard, insulation board.

According to the first aspect, the invention relates to a process wherein R², R³, R⁴ independently from each other signify C₁ or C₂ saturated or C₂ unsaturated hydrocarbon residue, and/ or linear, cyclic or branched saturated or unsaturated C₃ to C₄₅ hydrocarbon. Specific groups of R², R³, R⁴ comprise methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, pentacosyl, hexacosyl, heptacosyl, octacosyl, nonacosyl, triacontyl, hentriacontyl, dotriacontyl, tritriacontyl, tetratriacontyl, pentatriacontyl. hexatriacontyl, heptatriacontyl, octatriacontyl, nonatriacontyl, tetracontyl, hentetracontyl, dotetracontyl, tritetracontyl, tetratetracontyl, pentatetracontyl and isomers thereof, or isopropyl, isobutyl or saturated or unsaturated, hydrocarbon straight-chain, cyclic or branched hydrocarbons having up to 20 carbon atoms, allyl or butadienyl or cycloaliphatic, such as a cyclohexyl radical, or aromatic radical, such as phenyl, naphthyl or benzyl.

According to the first aspect the invention relates to a process wherein R², R³, R⁴ independently from each other signify C₁ or C₂ saturated hydrocarbon residue, and/ or linear, cyclic or branched saturated C₃ to C₂₀ hydrocarbon. According to that embodiment, specific groups of R², R³, R⁴ comprise: Methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, or isopropyl, isobutyl or saturated or unsaturated, hydrocarbon straight-chain, cyclic or branched hydrocarbons having up to 20 carbon atoms, allyl or butadienyl or cycloaliphatic, such as a cyclohexyl radical, or aromatic, such as phenyl, naphthyl or benzyl.

According to the first aspect, the invention also relates to a process, wherein the polyorganosiloxane compound comprises further at least one bivalent moiety -R-consisting of C₁ to C₂₀ saturated or unsaturated, linear or branched hydrocarbon residue optionally including one or more hetero atoms of O, S, N, linking at least one ammonium group residue of formula (I) to a siloxane moiety via the binding site *. To be consistent with the above-described structure of the polyorganosiloxane, at least one above-defined R^{org} group corresponds to the bivalent moiety -R-. The number of the bivalent moiety -R-in said polyorganosiloxane compound may be at least 1 or at least 2 or at least 3 or at least 5 or at least 7, or at least 10, and at most 25, or at most 20, or at most 15, or at most 13, or at most 10, or may range from 1 to 25, or from 1 to 20, or from 1 to 15, or from 1 to 10, or may be 1, 2, 3, 4, 5, 6, 7, 8, 9, 10, 11, 12, 13, 14, 15, 16, 17, 18, 19, 20, 21, 22, 23, 24, 25, or 5, or 4 or 3 or 2.

The one or more hetero atoms O, S, N in said at least one bivalent moiety -R-signifies of -OH, -SH, -NH2, or =O, =S, =NH, or-O-, -S-, or-NH-. In preferred embodiments the bivalent moiety -R- signifies
-(CH₂)₁₋₂₀-, -(CH₂)₁₋₁₀-(CH(CH₂)₁₋₅-(CH₂)₁₋₁₀-, or -(CH₂)₁₋₁₀-(NH)-(CH₂)₁₋₁₀-, or -(CH₂)₁₋₁₀-(NH)-(CH₂)₁₋₁₀-(CHNH₂)-(CH₂)₁₋₁₀, or -((CH₂)₂-NH-)₁₋₇(CH₂)₁₋₆-, -(CH₂-CH₂-NH)₁₋₇(CH₂)₁₋₆-, -(CH₂)₁₋₁₀-(NH)-(CH₂)₁₋₁₀-(NH)-(CH₂)₁₋₁₀-, -((CH₂)₂-O-)₁₋₇(CH₂)₁₋₆-, or -(CH₂)₁₋₅-(CHOH)-(CH₂)₁₋₆-, or -(CH₂)₁₋₈-O-(CH₂)₁₋₅-(CHOH)-(CH₂)_{1,2}-.

According to the first aspect, the invention relates to a process wherein the polyorganosiloxane compound is a compound of formula (II): 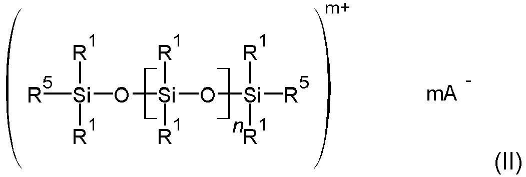 wherein R¹ signifies independently from each other an organic aliphatic C₁ to C₆ residue, or signifies the bivalent moiety -R- linking at least one ammonium group residue of formula (I) via the binding site * to a siloxane moiety as specified in the present application, wherein at least one, preferably at least 10, preferably at least 20 of R¹ together with R⁵ in compound of formula (II) signify the bivalent moiety -R-, m+ signifies the m-fold positive charged allocated to the polyorganosiloxane compound, mA⁻ signifies m charge balancing anions A⁻ selected from the group consisting of: halogenide, hydroxide, ⅓ borate, ½ sulfate, ⅓ phosphate, nitrate, carboxylates, or mixtures thereof, n signifies the number average degree of polymerization and is from 9 to 200, preferably 30 to 150, preferably 35 to 75, preferably 40 to 60. Preferably, R¹ signifies independently from each other an organic aliphatic C₁ to C₆ residue and R⁵ signifies the bivalent moiety -R- as specified in the present application, linking at least one terminal, preferably two terminal ammonium group residues of formula (I) via the binding site * to a siloxane moiety.

The ammonium group residues are bound via the bivalent moiety -R- to the polyorganosiloxane backbone. Preferably, the polyorganosiloxane backbone is a linear polymeric chain. In preferred embodiments n is at least 9, or at least 10, or at least 15, or at least 20, or at least 25, or at least 30 or at least 35 and at most 200, or at most 175, or at most 150, or at most 125, or at most 100, or at most 75, or is from at least 9 to at most 200, or from at least 10 to at most 200, or is from at least 15 to at most 175, or is from at least 15 to at most 150, or is from at least 20 to at most 150, or is from at least 25 to at most 125, or is from at least 30 to at most 100, or is from at least 35 to at most 75, or is from at least 40 to at most 60.

The number of the bivalent moiety -R- in said polyorganosiloxane compound of formula (II) may be at least 1 or at least 2 or at least 3 or at least 5 or at least 7, and at most 25 or at most 20 or at most 15 or at most 13 or at most 10 or may range from 1 to 25, or from 1 to 20 or from 1 to 15 or from 1 to 10 or may be 1, 2, 3, 4, 5, 6, 7, 8, 9, 10, 11, 12, 13, 14, 15, 16, 17, 18, 19, 20, 21, 22, 23, 24, 25, or 5, or 4, or 3, or 2.

According to the first aspect the invention also relates to a process, wherein the weight average molecular weight of the polyorganosiloxane compound ranges from Mw= 2.000 g/mol to Mw= 12.000 g/mol, the Mw being determined by Gel Permeation Chromatography employing a standard polystyrene calibration. In preferred embodiments the weight average molecular weight of the polyorganosiloxane compound is at least 2000 g/mol, or at least 2500 g/mol, or at least 3000 g/mol, or at least 3500 g/mol to at most 12.000 g/mol, or at most 11.000 g/mol, or at most 10.000 g/ mol or at most 9.000 g/mol, or at most 8000 g/mol, or at most 7.000 g/mol, or at most 6.000 g/mol, or at most 5.000 g/mol, or from at least 2000 g/ mol to at most 12.000 g/mol, or from at least 2.000 g/mol to at most 11.000 g/mol, or from at least 2.000 g/mol to at most 10.000 g/mol, or from at least 2.5000 g/mol to at most 9.000 g/mol or from at least 2.500 g/mol to at most 8.000 g/mol, or from at least 2.500 g/mol to at most 7.000 g/mol or from at least 3.000 g/mol to at most 6.000 g/mol or from at least 3.500 g/mol to at most 5.500 g/mol.

According to the first aspect, the process of the invention comprises the steps: a) optionally pre-drying the lignocellulosic material, b) impregnating the lignocellulosic material with an aqueous composition comprising the polyorganosiloxane compound as described herein, c) drying the impregnated lignocellulosic material. In the following, the process steps will be described in further detail. Variations and parameter ranges can be adjusted to optimize the result of the process of the invention in view of the shape/ dimension and the type of the lignocellulosic material to be treated.

In the optional pre-drying step a) heat and/ or vacuum is applied to the lignocellulosic material to reduce the moisture content of the lignocellulosic material if needed. It is beneficial to adjust the moisture content of the lignocellulosic material to predetermined ranges to increase the absorption capacity of the lignocellulosic material and to effect an optimized impregnation of the lignocellulosic material with the aqueous composition comprising the polyorganosiloxane compound as described herein. Preferably, drying is performed at reduced pressures and ambient temperature. In certain embodiments drying is performed at least at pressures of 20 mbar, or at least 25 mbar, or at least 30 mbar, or at least 35 mbar, or at least 40 mbar, or at pressures of at most 100mbar, or at most 90 mbar, or at most 80 mbar, or at most 70 mbar, or at most 60 mbar, or from at least 20 mbar to at most 100 mbar or from at least 25 mbar to at most 90 mbar, or from at least 30 mbar to at most 85 mbar, or from at least 35 mbar to at most 80 mbar, or from at least 40 mbar to at most 70 mbar.

Also, the pre-drying can be performed at atmospheric pressure and at temperatures in the range of at least 20°C, or at least 30°C, or at least 40 °C, or at least 50 °C and at most 140°C, or at most 130 °C, or at most 120°C, or at most 110°C or at most 100°C, or in the range of at least 20°C and at most 140°C, or at least 30°C and at most 130 °C, or at least 40°C and at most 120°C, or at least 50°C and at most 110 °C, or at least 50°C and at most 100°C.

The pre-drying can be performed within the above specified temperature and vacuum pressure ranges.

In the impregnation step b), the lignocellulosic material is allowed to adopt ambient temperature (i.e. 20 to 25°C) and is treated with an aqueous composition of the polyorganosiloxane compound as described above. The term "impregnation" means within the context of the present invention that air inclusions present in the lignocellulosic material are replaced by the penetrating aqueous composition comprising the polyorganosiloxane compound. The penetrating aqueous composition comprising the polyorganosiloxane compound thereby enters the lumen of cell like structures as well as cell wall domains of the lignocellulosic material. Preferably a vacuum-pressure treatment procedure is applied to the lignocellulosic material to assist and enhance the uptake of the aqueous composition comprising the polyorganosiloxane compound into the structure parts of the material. In certain embodiments consecutive vacuum-pressure treatment cycles are preferably applied. In one embodiment the impregnation comprises 1 cycle, at least two cycles or at least 3 cycles or at least 4 cycles or at least 5 cycles and at most 10 cycles, or at most 9 cycles or at most 8 cycles, or at most 7 cycles, or at least from 1 to at most 10 cycles, or from at least 2 to at most 8 cycles, or from at least 3 to at most 7 cycles. The term "cycle" within the present context means that vacuum is applied for a predetermined time followed by the application of pressure for a predetermined time. Vacuum may applied for at least 15 min, or at least 30 min, or at least 45 min or at least 60 min, and at most for 10 hours or at most for 8 hours or at most for 6 hours or at most for 5 hours or at most for 3 hours, or from at least 15 min to at most 10 hours, or from at least 30 min to at most 8 hours, or from at least 45 min to at most 6 hours, or from at least 60 min to at most 5 hours, or from at least 15 min to at most 3 hours. Pressure may be applied for at least 30 min, or at least 45 min, or at least 60 min, or at least 2 hours, or at least 3 hours, and at most 36 hours, or at most 24 hours, or at most 18 hours or at most 12 hours, or at most 6 hours, or from at least 30 min to at most 36 hours, or from at least 45 min to at most 24 hours, or from at 60 min to at most 18 hours, or from at least 2 hours to at most 12 hours, or from at least 30 min to at most 18 hours. Duration of the vacuum and pressure application depends on the wood material and the specific dimension of the treated lignocellulosic material, and the dimensions of the article made from said lignocellulosic material. During the pressure step, the lignocellulosic material is immersed in the aqueous composition comprising the polyorganosiloxane compound. During the vacuum step the lignocellulosic material is removed from the aqueous composition comprising the polyorganosiloxane.

In the drying step c) the impregnated lignocellulosic material is dried. The water part of the aqueous composition comprising the polyorganosiloxane compound is removed by evaporation from the lignocellulosic material, such that the polyorganosiloxane compound remains in the cell wall structure and/ or cell lumina of the lignocellulosic material. Drying is performed under heating conditions. Heating temperatures are selected to effect a thermal induced curing of the polyorganosiloxane compound that remained in the lignocellulosic material.

Step c) can be performed at temperatures of 20 to 120°C, preferably 30 to 120°C, or preferably 40°C to 120°C, or preferably 50 to 100°C, or preferably 55 to 90°C, preferably 60 to 85 °C. Preferably drying is performed at temperatures of at least 20°C, or at least 30 °C, or at least 40 °C or at least 50 °C, or at least 55 °C, or at least 60 °C, or at least 65 °C, or at least 70 °C, or at temperatures of at most 120°C, or at most 110°C, or at most 103°C, preferably at most 100°C, or at most 95° C, or at most 90°C, or at most 85°C, or at most 80 °C, or at least 50 °C and at most 100 °C, or at least 55°C and at most 95°C, or at least 60°C and at most 90°C, or at least 65°C and at most 85 °C, or at least 70°C and at most 80°C. Process time of drying step c) is in the range of at least 24 hours, or at least 36 hours, or at least 48 hours, or at least 60 hours, or at least 72 hours, or at least 84 hours and at most 216 hours, or at most 204 hours, or at most 192 hours, or at most 180 hours or at most 168 hours, or at most 156 hours, or from at least 24 hours to at most 216 hours, or from at least 36 hours to at most 204 hours, or at least 48 hours to at most 192 hours, or at least 48 hours to at most 180 hours, or at least 60 hours to at least 168 hours.

Preferably, drying step c) comprises a pre-drying step c1) and at least one drying step c2). Pre-drying step c1) can be applied to the impregnated lignocellulosic material following immediately to the impregnation step and applied prior to the drying step c2). With employing a pre-drying step c1) occurrence of heavy cracks or other drying failure in the impregnated materials can be avoided. In certain embodiments such failures can be expected when the lignocellulosic material is exposed to temperatures of greater than 50 °C directly after the impregnation step, since such lignocellulosic material can have very high moisture content levels (above 100 %rel. moisture content) directly after the impregnation with the aqueous composition. The pre-drying therefore enables a smooth drying before the lignocellulosic material is processed in a drying chamber at higher temperatures. In pre-drying step c1), the impregnated lignocellulosic material is dried at lower temperatures compared to drying step c2). In embodiments pre-drying step c1) is performed at temperatures of at least 15°C or at, least 20°C, or at least 25 °C, or at least 30 °C, or at least 35 °C, and at most 80 °C, or at most 75 °C, or at most 70 °C, or at most 65 °C, or at most 60 °C, or at most 55 °C, or at temperatures of at least 15°C to at most 80°C, or at least 20 °C to at most 75°C, or from at least 25 °C to at most 70°C, or at least 30°C to at most 65°C, or at least 35°C to at most 60°C, or at least 40°C to at most 55°C. Process times of pre-drying step c1) is in the range of at least 12 hours, or at least 36 hours, or at least 60 hours, or at least 84 hours, or at least 108 hours, or at least 132 hours, or at least 156 hours and at most 504 hours, or at most 456 hours, or at most 408 hours, or at most 360 hours, or at most 412 hours, or at most 364 hours, or at most 316 hours, or at most 268 hours, or at most 220 hours or in the range of at least 12 hours to at most 504 hours, or at least 36 hours to at most 456 hours, or at least 60 hours to at most 408 hours, or at least 84 hours to at most 364 hours, or at least 108 hours to at most 316 hours, or at least 132 hours to at most 268 hours, or at least 156 hours to at most 220 hours.

Further, final step c) can comprise a sequence of drying steps starting with the pre-drying step c1) and subsequent drying step c2).

According to the first aspect, the process of the invention is characterized in that step b) is a vacuum-pressure impregnation process performed at pressure ranges from 5 mbar to 20 bar. Preferably the vacuum-pressure impregnation process is divided in vacuum and an over pressure phase. In one preferred embodiment only one vacuum-pressure cycle is applied. The vacuum phase is performed at pressures of at least 5 mbar, or at least 10 mbar, or at least 15 mbar, or at least 20 mbar, or at least 25 mbar, or at least 30 mbar, or at least 40 mbar, or at least 50 mbar, and at most 800 mbar, or at most 700 mbar, or at most 600 mbar, or at most 500 mbar, or at most 400 mbar, or at most 300 mbar, or in the range of at least 5 mbar and at most 800 mbar, or at least 10 mbar and at most 700 mbar, or at least 15 mbar and at most 600 mbar, or at least 20 mbar and at most 500 mbar, or at least 25 mbar and at most 500 mbar, or at least 30 mbar and at most 400 mbar, or at least 40 mbar and at most 300 mbar, or at least 50 mbar and at most 100 mbar. The vacuum may be applied for at least 5 min, or at least 10 min, or at least 15 min, or at least 30 min, or at least 45 min, or at least 60 min, and at most 4 h, or at most 3,5 h, or at most 3 h, or at most 2 h or at most 1,5 h, or for at least 5 min and at most 4 h, or for at least 10 min and at most 3,5 h, or at least 15 min and at most 3 h. The subsequently following over-pressure phase is performed at pressure ranges of at least 1 bar, or at least 2 bar, or at least 3 bar, or at least 4 bar, at least 5 bar, or at least 6 bar, or at least 7 bar, or at least 8 bar, or at least 9 bar, and at most 20 bar, or at most 18 bar, or at most 16 bar, or at most 14 bar, or at most 13 bar, or at most 12 bar, or in the range of at least 1 bar and at most 20 bar, or at least 2 bar and at most 18 bar, or at least 3 bar and at most 16 bar, or at least 4 bar and at most 14 bar, or at least 5 bar and at most 12 bar, or at least 6 bar and at most 10 bar. The pressure may be applied for at least 10 min, or at least 20 min or at least 30 min, or at least 45 min, or at least 60 min, or at least 2 hours, or at least 3h, or at least 4 h, or at least 5 h, or at least 6 h, or at least 7 h, or at least 8 h, and at most 19 h, or at most 18 h, or at most 17 h, or at most 16 h, or at most 15 h, or at most 14 h, or at most 13 h, or at most 12 h, or at most 10 h, or at least 10 min and at most 19 h, or at least 30 min and at most 18 hours, or at least 1 hour and at most 10 h.

The process according to the invention can be characterized in that step a) is included in the process and the lignocellulosic material is pre-dried in step a) to a residual moisture content of 0.1 to 20 %. Within the context of the present application percentage of residual moisture content is meant to refer to the relative moisture content of a lignocellulosic material. The definition and determination of the relative moisture content of a lignocellulosic material, such as wood, is known in the art. The percentage of relative moisture content is given by ratio of the moisture content (in weight units) to the dry mass (in weight units) of the lignocellulosic material under investigation multiplied by 100. The moisture content has an impact on the efficacy of the impregnation. The higher the moisture content is, the lower is the efficacy of the impregnation and thus, less chemical molecules can penetrate the wood cell wall of the lignocellulosic material. In a rough estimate, at relative moisture contents of above 25 to 30 %, the wood cell wall is almost filled completely with water. In one embodiment, the relative moisture content of the lignocellulosic should therefore range within 0 to 20 % before treating the lignocellulosic material according to the invention. Preferably the moisture content of the lignocellulosic material in step a) is adjusted to a residual moisture content of at least 0.1 %, or at least 1%, or at least 5%, or at least 8%, or at least 10%, or at least 13%, or at least 15 % and to at most 20 %, or at most 19 %, or at most 18%, or at most 17%, or is adjusted to the range of at least 0.1 % to 20%, or at least 1 % to at most 19%, or at least 2 % to at most 18 %, or at least 5 % to at most 17%, or at least 10 to at most 17%, or at least 12 % to at least 16 %, or preferably to 15% ±1 %.

As mentioned above, an aqueous composition comprising the polyorganosiloxane compound in an amount of from 5 to 20 wt%, or 7 to 15 wt% based on the total weight of the aqueous composition is used in step b). The content of the polyorganosiloxane compound in the aqueous composition is at least 0.5 wt%, or at least 1 wt%, or at least 2 wt%, or at least 4 wt%, or at least 6 wt%, or at least 8 wt%, and at most 80 wt%, or at most 60 wt%, or at most 40 wt%, or at most 20 wt%, or at most 15 wt%, or at most 12 wt%, or the polyorganosiloxane is contained in the aqueous composition in an amount of at least 0.5 wt% to at most 80 wt%, or at least 1 wt% to at most 60 wt%, or at least 2 wt% to at most 40 wt%, or at least 4 wt% to at most 20wt%, or at least 6 wt% to at most 15 wt%, or at least 8 wt % to at most 12 wt%, wherein the wt% are based on the total weight of the aqueous composition. The aqueous composition may also comprise emulsifiers and solubilizers. Preferably, the remainder to 100 wt% of the aqueous composition is water. The concentration of the polyorganosiloxane in the aqueous composition depends on a respective application the impregnated lignocellulosic material is intended for. High concentration ranges are applicable in case the lignocellulosic material is intended for high performance requirements for example in outdoor or high moisture environment.

The aqueous composition comprising the polyorganosiloxane compound is adjusted at a pH in the range of 3 to 6,5, or 3,5 to 6, or 4 to 5,5. A predetermined pH value in the herein specified ranges guarantees stability of the aqueous composition comprising the polyorganosiloxane compound and homogeneous distribution on the lignocellulosic material.

The aqueous composition comprising the polysiloxane compound may be further characterized in that the aqueous composition is heavy metal free. *"Heavy metal free"* in the context of the present application means that no metal with a density of above 5 g/ cm³ in the pure form is present in the aqueous composition. The term "metal" includes the metal in ion, complex, compound, and pure form. The term "free" means that no heavy metal is added to the aqueous composition. The term "free" does not comprise unavoidable traces of heavy metals which may be always present as unavoidable contaminants.

A commercially available polyorganosiloxane compound respectively aqueous composition comprising a respective polyorganosiloxane compound is Siligen^{®} MIH liq.

In a second aspect, the invention relates to a lignocellulosic material that has been treated in a process according the first aspect of the invention. Thus, all the above-described features described with reference to the first aspect of the invention will apply for the second aspect of the invention as well. The lignocellulosic material may be in any processed state of engineered wood like particleboard, medium density fiberboard, oriented strand boards (OSB), paper, cardboard, lignocellulose-based insulation board, plywood, veneers, and packaging materials. The lignocellulosic material according to the invention may have any dimensions and volumes. Particularly advantageously, the lignocellulosic material is in the form of wood processing products, such as wooden boards, beams, laths, panels, timber, rafters, furniture, floorboards.

The present invention further relates to a process for treating a lignocellulosic material with at least one polyorganosiloxane compound at a temperature of less than 100°C. All the above disclosed description for the individual process steps apply for this embodiment of the additional process as well, with the exception that the treatment is conducted at temperatures below 100°C, preferably below 95°C, preferably below 90°C, preferably below 85°C, preferably below 80°C and that the process is not restricted to the polyorganosiloxane compound according to the first aspect of the invention.

In one embodiment the afore mentioned process is performed by treating the lignocellulosic material with an aqueous composition comprising a polyorganosiloxane compound, which is not restricted to the polyorganosiloxane compound according to the first aspect of the invention, in an amount of from 2 to 40 wt%, or from 5 to 30 wt%, preferably 5 to 20 wt%, more preferably 7 to 15 wt% based on the total weight of the aqueous composition. The content of the polyorganosiloxane compound in the aqueous composition is at least 0.5 wt%, or at least 1 wt%, or at least 2 wt%, or at least 4 wt%, or at least 6 wt%, or at least 8 wt%, and at most 80 wt%, or at most 60 wt%, or at most 40 wt%, or at most 20 wt%, or at most 15 wt%, or at most 12 wt%, or the polyorganosiloxane is contained in the aqueous composition in an amount of at least 0.5 wt% to at most 80 wt%, or at least 1 wt% to at most 60 wt%, or at least 2 wt% to at most 40 wt%, or at least 4 wt% to at most 20wt%, or at least 6 wt% to at most 15 wt%, or at least 8 wt % to at most 12 wt%, wherein the wt% are based on the total weight of the aqueous composition. The aqueous composition may also comprise emulsifiers and solubilizers. Preferably, the remainder to 100 wt% of the aqueous composition is water. The concentration of the polyorganosiloxane in the aqueous composition depends on a respective application the impregnated lignocellulosic material is intended for.

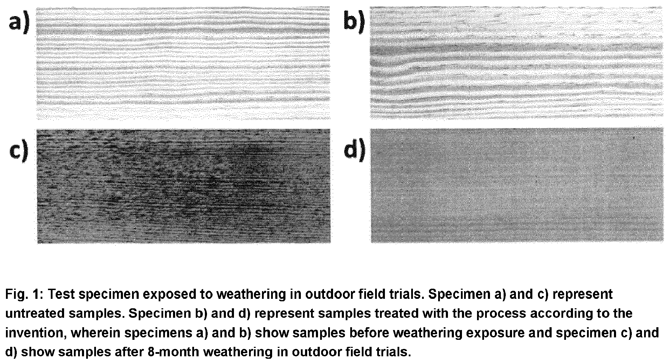

Advantageous abilities of the lignocellulosic material treated by the processes according to the invention were observed in dimension stability and resistance to weathering in outdoor field trials. Accordingly, board samples (50x25x500 mm³ and 80x20x400 mm³) were treated with the process described in any of the embodiments described above. Impregnation and drying at temperatures of 70°C gave improved results. The treated wood samples did not only show slight optical changes compared to an untreated reference sample. However, any detrimental drying defects like cracking, deformation, cell collapse, etc. were not observed. Those board samples showed also enhanced weathering durability in respective durability tests. The material performance with respect to the weathering durability were validated on specimens according to DIN EN 335 (2013). Boards treated with the process according to the invention showed less tendency to surface graying and a better compliance with the dimensional accuracy after two months of outdoor environmental exposure even in soil contact. Qualitative results are shown in Fig. 1. The lignocellulosic material treated with the processes of the invention therefore turned out to satisfy the requirements of an industrial implementation in many technical areas of application like, furniture making, carpentry, house building, timber construction, gardening and agriculture, shipbuilding and model making.

In one embodiment of the second aspect, the lignocellulosic material is characterized in that the weight percentage gain after drying and leaching determined according to DIN EN 84 - 2020 is 15% or less, or 10 % or less, or 7% or less, preferably from 4 to 8% or from 5 to 7%. In certain embodiments the weight percentage gain is at least 1 %, or at least 2 %, or at least 4 %, or at least 5% and at most 7%, or at most 6.5%, or at least 2% to at most 7%, or at least 3% to at most 7%, or at least 4% to at most 7 %, or at least 5% to at most 7%, or at least 5% to at most 6.5%. The weight percentage gain effected by the uptake of the cationic polyorganosiloxane compound is preferred in a narrow range between 5% to 7%. A too much uptake and a too high value of the weight percentage gain may result in in the loss of dimensional accuracy of the lignocellulosic material object. Thus, manufacturing processes using the lignocelluosic material having a too much uptake of the cationic polyorganosiloxane compound can be impaired. It turned out that the weight percentage gain of from 5 to 7% optimizes the needs of dimensional stability while maintaining weathering durability and biological resistance against wood-decay fungi. In specific embodiments, the weight percentage gain of above 7% can also be desirable, given that the dimensional stability of the lignocellulosic article is maintained. This may depend on the lignocellulosic material and the concentration of the polyorganosiloxane compound used in the treatment according to the invention.

In one further embodiment of the second aspect of the invention, lignocellulosic material is characterized in that the swelling coefficient determined to the procedure described herein is 14% or less, preferably 13.5% or less. In certain embodiments the swelling coefficient is 13.0% or less, or 12.5% or less. The swelling coefficient is a measure of the swell/shrinkage quality of the lignocellulosic material which is to be observed in an environment with alternating moisture conditions like in outdoor weathering. A low swell coefficient is preferable and indicates a low swell/ shrinkage behavior of the lignocellulosic material. Particularly, in constructional applications it is important that the swell shrinkage quality of the lignocellulosic material is low to ensure dimensional stability and durability of construction employing the lignocellulosic material. Swell shrinkage behavior in environments of alternating moisture conditions is characteristic to all lignocellulosic material. The swelling coefficient is determined according to the following procedure: An oven-dry and treated lignocellulosic specimen, such as a wood block, is submersed in water and is saturated in water uptake. Water uptake is assisted by applying vacuum. Vacuum is applied for 30 min and the specimen is afterwards stored for another 24 hours under atmospheric pressure in water. Per definition, the specimen is considered to be saturated with water. Afterwards, the swelling coefficient is calculated, by comparing the dimension of the specimen in oven-dry state (rel. moisture content equals 0 %) and the dimensions in water-saturated state (after 30 min vacuum and 24 h water storage). In particular, the percent swelling coefficient is calculated by determining the ratios of the dimensions in the oven-dry state to the swelled state multiplied with 100.
It was however found that the cationic polyorganosiloxane compound used in the process of the invention, having ionic activity and therefore having affinity to water, imparts a swell coefficient to the lignocellulosic material that is below that of an untreated lignocellulosic material. The lignocellulosic material of the present invention therefore combines the needs of relevant moisture resistance and dimensional stability with desired resistance against wood-decay fungi.

In one further embodiment of the second aspect, the lignocellulosic material is characterized in that the mass loss by fungal decay of brown rot pathogen determined according to CEN/TS 15083-1 (2005) is below 5%. In certain embodiments, the mass loss by fungal decay of brown rot pathogen is less than 4.5% or is less than 4.0% or is less than 3.5% or is less than 3.0% or is less than 2.5% or is less than 2.0% or is less than 1.5%. While the fungal decay of brown rot pathogen is to some extend characteristic for all lignocellulosic materials, the lignocellulosic material of the present invention shows a significant decrease in the brown rot decay mass loss compared to untreated lignocellulosic materials, or lignocellulosic materials that are impregnated with alternative non-cationic polyorganosiloxanes. It is therefore apparent that the biological resistance of a lignocellulosic material treated with the process of the invention is significantly increased. That makes the lignocellulosic material of the present invention especially suitable for applications, where the lignocellulosic material is exposed to climatic conditions that promote fungal growth, i.e. wet room or outdoor applications.

In one further embodiment of the second aspect, the lignocellulosic material is characterized by having a cell wall bulking that is at least 1.50%. In certain embodiments the cell wall bulking of the lignocellulosic material is at least 1.55%, or is at least 1.60%, and at most 1.75%, or is at most 1.70%, or is at least 1.50% to at most 1.75%, or is at least 1.55% to at most 1.70%. Cell wall bulking describes the dimensional deviation of a lignocellulosic material object that is treated in a process according to the invention by swelling. Cell wall bulking thereby provides a measure for the amount of polyorganosiloxane compound that is intercalated into the lignocellulosic material during the process conditions of the process of the invention. The cell wall bulking of lignocellulosic material treated with a cationic polyorganosiloxane compound described herein is found to be higher than that of comparative examples wherein non-cationic polyorganosiloxanes were used. Accordingly, the uptake of the cationic polyorganosiloxanes is improved over the art using the same process parameter conditions. However, the swelling induced by the uptake of the cationic polyorganosiloxane ranges remains in the low percent range.

In one further embodiment of the second aspect, the lignocellulosic material is characterized in that the ability of liquid water uptake is significantly reduced over comparative lignocellulosic material that employ non-cationic polyorganosiloxanes. It is therefore apparent that the resistance to water and/ or moisture exposure of a lignocellulosic material treated according to the process of the invention is significantly improved.

In accordance with the present invention is also the use of a polyorganosiloxane compound as defined above or the use of an aqueous composition as defined above for the treatment of lignocellulosic material. Preferably, the use according to the invention encompasses the use of a polyorganosiloxane compound as defined above as a treatment agent for lignocellulosic material and/or the use of a polyorganosiloxane compound as defined with reference to the first aspect of the invention for increasing the resistance to water uptake of lignocellulosic material.

### Examples

### Example 1. Working Example: Impregnation of lignocellulosic test specimen

An aqueous composition comprising 10g of Siligen^{®} MIH liq in 100ml water was used. Test specimen of 20 × 20 × 10 mm³ of Scots pine sapwood (*Pinus sylvestris* L.) pre-dried to a residual relative moisture content of 0 % were impregnated with the aqueous composition solution in a vacuum-pressure impregnation process. Vacuum is applied at the pressure of 50 mbar for 1.0 hour at ambient temperature. Subsequently overpressure is applied at 10 bar for 2.0 hours at ambient temperature. The impregnated test specimens were dried in a first drying step at 20°C for 72 hours. A second drying step was applied to the test specimen at 80°C for 48 hours.

### Example 2. Comparative Example: Impregnation of lignocellulosic test specimen

Impregnation of comparative test specimens CE 1 and CE2 according to the procedure described in Example 1 were produced with the difference that an aqueous composition comprising 10g Solusoft SEID in 100 ml water was used for CE1, and an aqueous composition comprising 10g Solusoft NMW in 100 ml water was used for CE2. Solusoft SEID is a polydimethylsiloxane compound bearing no functional terminal groups and bearing amino-functional side chain groups which are iso-alkylpolyglycol ether-amino functionalized.
Solusoft NMW is a polydimethylsiloxane compound bearing no functional terminal groups and bearing amino-functional side chain groups which are acetyl-amino functionalized.

### Example 3. Leaching and Fixation

Test specimens of 20 × 20 × 10 mm³ were impregnated according to the procedure described in Example 1. Test specimens were dried at respectively different drying temperatures. The second drying step described in Example 1 was varied between 70 to 120°C. The procedure was carried out in accordance with standard DIN EN 84 - 2020-10. The test specimens were subjected to a 20-minute vacuum impregnation with demineralized water to the maximum water uptake and were subject to a 14-day washout test. The washout test included 9 water changes under permanent water storage. After completion of the washout tests, the test specimens were dried to their absolute dry mass. The absolute dry masses were recorded. The remaining part of the cationic polyorganosiloxane used according to Example 1 in the test specimens after washing was calculated from the difference weighing of the starting test specimen and the obtained test specimen after the washout test and is expressed in weight percentage gain (WPG). Results are shown in table 1.

**Table 1: Weight percentage gain (WPG) after drying and leaching EN 84 - 2018-10**

| **Drying temperature [°C]** | **WPG [%]** |
|---|---|
| 70 | 6.3 |
| 80 | 6.3 |
| 90 | 5.4 |
| 103 | 7.2 |
| 110 | 8.1 |
| 120 | 8.1 |

As can be seen from table 1, drying temperatures of 103, 110 and 120 °C result in the highest weight percentage gain. It was however surprisingly found that lower drying temperatures of 70 and 80 °C are still acceptable in weight percentage gain and are surprisingly higher than the WPG at the drying temperature of 90 °C. It is thus possible to lower the drying temperature in industrial lignocellulosic material treatment processes when using the process of the invention. Lower drying temperatures stand for energy savings and less thermal stress on respectively treated lignocellulosic articles.

### Example 4. Determination of the swelling coefficient

Test specimens of 20 × 20 × 10 mm³ impregnated according to the procedure in Example 1 and dried at different drying temperatures as outlined in Example 3 were produced. The test specimens were subjected to a vacuum impregnation step with demineralized water by applying a vacuum at the pressure of 100 mbar for 30 min and subsequent storage of the test specimen under demineralized water for 24 hours such that the test specimen reach their maximum swollen state. A native control sample not treated according to the procedure of Example 1 was treated under the same vacuum impregnation step as the test specimens. Repetitive cycles of drying and water saturation were applied. The swelling coefficient was determined according to the following procedure: Test specimens were submersed in water under vacuum for 30 min and were left submersed in liquid water for another 24 hours under atmospheric pressure. Afterwards, dimensions of the swelled test specimens were measured. Water-saturated specimens were re-dried by storing them for 72 hours at standard climate conditions (20 °C), followed by a stepwise drying for 24 hours at 60 °C, 80 °C and 103 °C. After this procedure, the first drying/ water saturation cycle is completed, and the oven-dry specimen dimensions are measured in order to enable the calculation of the swelling coefficient. The swelling coefficient are recorded after 4 drying/ water saturation cycles. The dimensions of the test specimen and the native control sample were measured. The determined reduction of moisture-induced dimensional changes was expressed in the term of the swelling coefficient. Results are shown in table 2.

**Table 2: Swelling coefficient of test specimen**

| **Test specimen No.** | **Drying temperature [°C]** | **Swelling coefficient (%)** |
|---|---|---|
| 1 | Untreated | 14.3 |
| 2 | 70 | 12.4 |
| 3 | 80 | 13.5 |
| 4 | 90 | 12.7 |
| 5 | 103 | 13.1 |
| 6 | 110 | 13.1 |
| 7 | 120 | 12.9 |

Test specimen obtained after impregnation according to the process of the invention show, that at low drying temperatures result in higher swelling shrinkage recovery, i.e. a lower swelling coefficient.

### Example 5: Mass loss by fungal decay.

Biologically resistance against wood-decay fungi is evaluated in terms of the mass loss by fungal decay. Test specimen produced according to the procedures described in Example 1 were subjected to a washout procedure according to DIN EN 84 - 2020-10. After that, test specimens were inoculated with pure cultures of wood-destroying basidiomycetes according to standard CEN/TS 15083-1 (2005). Incubation was respectively carried out in culture vessels with the white rot pathogen "Trametes versicolor" and the brown rot pathogen "Coniophora puteana" over a period of 16 weeks. After 16 weeks, the test specimens were removed from the culture vessels and the loss of mass due to fungal degradation was calculated. Comparatively, a native control test sample, not treated according to Example 1 was treated under the same incubation procedure.

Further comparative test specimens CE1 and CE2 produced according to Example 2 were used, treated in the same washout procedure according to DIN EN 84 - 2020-10 and were respectively inoculated with the same pure cultures of wood-destroying basidiomycetes according to standard CEN/TS 15083-1 (2005). Likewise, incubation was respectively carried out in culture vessels with the white rot pathogen "Trametes versicolor" and the brown rot pathogen "Coniophora puteana" over a period of 16 weeks. After 16 weeks, the comparative test specimens for CE1 and CE2 were removed from the culture vessels and the loss of mass due to fungal degradation was calculated.

Results are shown in table 3.

**Table 3: Mass loss by fungal decay**

| **Test specimen** | **Mass loss [%]** |
|---|---|
| Inventive sample Brown rot | 1 |
| Inventive sample White rot | 2 |
| Comparative Example 1 Brown rot | 31 |
| Comparative Example 1 White rot | 2 |
| Comparative Example 2 Brown rot | 32 |
| Comparative Example 2 White rot | 2 |
| Control sample Brown rot | 44 |
| Control sample White rot | 27 |

Mass losses (ML) of inventive examples are below 5% for both the Brown rot and the White rot. The mass losses for White rot in CE 1 and CE 2 are the same to that of the Inventive Sample. The mass loss to Brown rot of the inventive sample is however significantly lower than the mass losses determined for the native control and the CE 1 and CE 2 samples. Correspondingly, the treatment of samples according to the invention causes a significant increase in resistance to wood-destroying fungi.

### Example 6: Cell wall bulking

A test specimen according to Example 1 was produced. Comparative test specimen CE 2 and CE 1 were produced according to Example 2. A further comparative untreated native test specimen was provided. The test specimens were dried to absolute dryness (i.e. wood moisture content - 0 %). Subsequently the permanent swelling was determined in terms of "cell wall bulking". As "cell wall bulking", the increase of the specimen dimension in the dry state after treatments according to Example 1/ Example 2 is meant. Cell wall bulking is calculated from the ratio of the dimensions before/ after treatment multiplied by 100. The swelling of the test specimen was compared to the dimensions in the absolutely dry state of the untreated native test specimen. Swelling values are expressed in "cell wall bulking (CWB)". The cell wall bulking indicates the uptake of the molecules introduced by impregnation, not only in the cell lumen but also in the wood cell wall itself. Results are shown in table 4. The CWB indicates the deposition of the polysiloxane compound in the cell wall. The higher the CWB, the higher are the expected improvements in the material characteristics.

**Table 4: Cell wall bulking of test specimen**

| **Test specimen** | **CWB [%]** |
|---|---|
| Inventive sample | 1.65 |
| Comparative Example 1 | 0.85 |
| Comparative Example 2 | 1.5 |

As can be seen, CWB values of the inventive test specimen prepared according to the invention exhibit a higher CWB value than the comparative examples. It is therefore apparent that the uptake of the finishing agent used in the method according to the invention is higher than in the comparative examples and therefore ensures enhanced material performance.

### Example 7 - Liquid water uptake

A test specimen according to Example 1 was produced. Comparative test specimen CE 2 and CE 1 were produced according to Example 2. Specimens of 10×5×100 mm³ were oven-dried at 103 °C until constant mass (oven-dry mass at 0 % moisture content). The oven-dry mass is measured. Dry test specimens are submersed in water for 24 hours under atmospheric pressure and ambient temperature. After 24 hours the mass of the submersed specimens was measured, and the liquid water uptake was calculated from the weight of the untreated starting test specimen. Additionally, a comparative untreated native test specimen was provided. Results are shown in table 5.

**Table 5: Liquid water uptake of test specimen**

| **Test specimen** | **% Water uptake** |
|---|---|
| Inventive Sample | 57 |
| Comparative Example 1 | 63 |
| Comparative Example 2 | 66 |
| Untreated, native control Sample | 83 |

The comparison between the Inventive Example and the Comparative Examples CE 1 and CE 2 shows that the water uptake in case of the inventive example is significantly lower. It is therefore apparent that the test specimen treated with the method according to the invention are more resistant to water uptake and are therefore also more resistant to alternating moisture conditions which are prevailing under outdoor conditions.

Summarizing the experimental data outlined above, it was surprising that while using drying temperatures of below 90 °C no significant reduced fixation of the polyorganosiloxane compound was observed, as the skilled person would expect from the prior art and from experiments performed at higher drying temperatures of above 90°C as listed in table 1. At the time the anti-fungal properties towards white rot were excellent, even though polysiloxane concentrations in water of only 10 wt% were used and the weight percent gain WPG yielded was only 6-8%.

## Claims

1. Process for treating a lignocellulosic material with at least one polyorganosiloxane compound, the polyorganosiloxane compound comprising a polyorganosiloxane backbone and at least one ammonium group residue of formula (I): 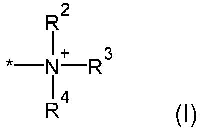 wherein
R², R³, R⁴ independently from each other signify linear, cyclic or branched, saturated or unsaturated, substituted or unsubstituted C₁ to C₄₅ hydrocarbon residues optionally including one or more hetero atoms of O, S, N,
* signifies the binding site linking to the polyorganosiloxane backbone.

2. The process according to claim 1 wherein R², R³, R⁴ independently from each other signify C₁ or C₂ saturated or C₂ unsaturated hydrocarbon residue, and/ or linear, cyclic or branched saturated or unsaturated C₃ to C₄₅ hydrocarbon.

3. The process according to any one of the preceding claims, wherein R², R³, R⁴ independently from each other signify C₁ or C₂ saturated hydrocarbon residue, and/ or
linear, cyclic or branched saturated C₃ to C₂₀ hydrocarbon.

4. The process according to any one of the preceding claims, wherein the polyorganosiloxane compound comprises further at least one bivalent moiety -R-consisting of C₁ to C₂₀ saturated or unsaturated, linear or branched hydrocarbon residue optionally including one or more hetero atoms of O, S, N, linking at least one ammonium group residue of formula (I) via the binding site * to a siloxane moiety of the polyorganosiloxane backbone.

5. The process according to any one of the preceding claims, wherein the polyorganosiloxane compound is a compound of formula (II): 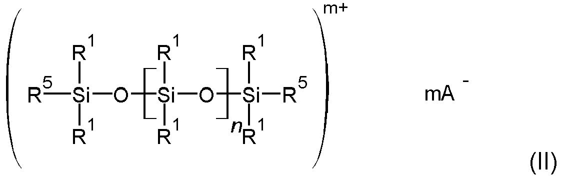 wherein
R¹ and R⁵ signifies independently from each other an organic aliphatic C₁ to C₆ residue, or a bivalent moiety -R- as specified in claim 4, linking at the least one ammonium group residue of formula (I) via the binding site * to a siloxane moiety, wherein at least one, preferably two, or preferably at least 10, preferably at least 20 of R¹ together with R⁵ in compound of formula (II) signify the bivalent moiety -R-,
m+ signifies the m-fold positive charge allocated by polyorganosiloxane compound mA⁻ signifies m charge balancing anions A⁻ selected from the group consisting of:
halogenide, hydroxide, ⅓ borate, ½ sulfate, ½ phosphate, nitrate, carboxylates, or mixtures thereof
n signifies the number average degree of polymerization and is from 9 to 200, preferably 30 to 150, preferably 35 to 75, preferably 40 to 60.

6. The process according to claim 5, wherein
R¹ signifies independently from each other an organic aliphatic C₁ to C₆ residue and R⁵ signifies the bivalent moiety -R- as specified in claim 4, linking at least one terminal, preferably two terminal ammonium group residues of formula (I) via the binding site * to a siloxane moiety.

7. The process according to any one of the preceding claims, wherein weight average molecular weight of the polyorganosiloxane compound ranges from 2.000 g/mol to 12.000 g/mol.

8. The process according to any one of the preceding claims, wherein treating the lignocellulosic material with at least one polyorganosiloxane compound comprises the steps:
a) optionally pre-drying the lignocellulosic material,
b) impregnating the lignocellulosic material with an aqueous composition comprising the polyorganosiloxane compound as defined in any one of claims 1 to 6,
c) drying the impregnated lignocellulosic material.

9. The process according to claim 8, wherein step c) is performed at temperatures of 20 to 120 °C, 30 to 120 °C, 40 to 120°C, 50 to 120°C, preferably 50 to 100°C, preferably 60 to 85 °C.

10. The process according to claims 8 or 9, wherein step b) is a vacuum-pressure impregnation process performed at pressure ranges from 5 mbar to 20 bar.

11. The process according to any one of claims 8 to 10, including step a), wherein in step a) the lignocellulosic material is pre-dried to a residual relative moisture content of 0.1 to 20 %, preferably 0.1 to less than 15%.

12. A process according to any one of the claims 8 to 11 wherein the aqueous composition is free of heavy metal compounds.

13. Process for treating a lignocellulosic material with at least one polyorganosiloxane compound, preferably in form of an aqueous composition, at a temperature of less than 100°C, preferably less than 80°C.

14. The process according to at least one of the claims 8 to 13, wherein the lignocellulosic material is treated with an aqueous composition comprising a polyorganosiloxane compound in an amount of from 2 to 40 wt%, or from 5 to 30 wt%, preferably 5 to 20 wt%, more preferably 7 to 15 wt% based on the total weight of the aqueous composition.

15. Lignocellulosic material treated in a process according to any one of claims 1 to 14.

16. Lignocellulosic material according to claim 15, **characterized in that** the weight percentage gain after drying and leaching determined according to DIN EN 84 - 2018-10 is 15% or less, or 10 % or less, or from 4 % to 85% or from 5 to 7%; and/or the lignocellulosic material is **characterized in that** the swelling coefficient determined to the procedure described in the description is 14% or less, preferably from 12 % to 13 %; and/or **characterized in that** the mass loss by fungal decay of brown rot pathogen determined according to CEN/TS 15083-1 (2005) is below 5%.

17. Use of a polyorganosiloxane compound as defined in any one of claims 1 to 7 or use of an aqueous composition comprising the polyorganosiloxane compound as defined in claims 8 to 12 and 14 as a treatment agent for lignocellulosic material.

18. Use of a polyorganosiloxane compound as defined in any one of claims 1 to 7 or use of an aqueous composition comprising the polyorganosiloxane compound as defined in claims 8 to 12 and 14 for increasing resistance to water uptake of lignocellulosic material.
